# EUROPÄISCHE PATENTSCHRIFT

(11) **EP 1 532 039 B1**
(45) Veröffentlichungstag und Bekanntmachung des Hinweises auf die Patenterteilung: **30.11.2005**
(21) Anmeldenummer: 03794854.4
(22) Anmeldetag: 08.08.2003
(51) Int. Cl.: B62D 65/00, B62D 25/06, B62D 25/04, B62D 25/10

(54) **KAROSSERIE FÜR EINEN KRAFTWAGEN**
MOTOR VEHICLE BODY
CARROSSERIE DE VOITURE

(30) Priorität: 27.08.2002 DE 10239988
(43) Veröffentlichungstag der Anmeldung: 25.05.2005
(73) Patentinhaber: DaimlerChrysler AG, 70567 Stuttgart (DE)
(72) Erfinder: EIPPER, Konrad, 72108 Rottenburg (DE); FUSSNEGGER, Wolfgang, 72074 Tübingen (DE); MAYER, Christian, 71254 Ditzingen (DE); SPIES, Bernhard, 71063 Sindelfingen (DE); VALDIVIESO, Carlos, 71701 Schwieberdingen (DE)
(86) Internationale Anmeldenummer: PCT/EP2003/008817
(87) Internationale Veröffentlichungsnummer: WO 2004/024542

(56) Entgegenhaltungen:
- GB-A- 2 366 544
- US-B1- 6 334 252

## Beschreibung

Die Erfindung betrifft eine Karosserie für einen Kraftwagen der im Oberbegriff des Patentanspruchs 1 angegebenen Art.

Aus der US-A-6 334 252 ist eine Tragstruktur mit einem aufgesetzten Dachmodul als bekannt zu entnehmen, an welches eine nahe dem Dach gelagerte Motorhaube angrenzt. Die Lageranordnung der Motorhaube ist dabei direkt an dem Dachmodul angeordnet und kann somit bereits vor dem Aufsetzen des Dachmoduls auf die Tragstruktur an dem Dachmodul vormontiert werden. Oberhalb eines Strukturbauteiles - bestehend aus einem Längsträger und einem Radlaufblech - sind zwei seitliche Lagerkonsolen für die Lageranordnung angeordnet, welche oberhalb des Radlaufes verlaufen. Die Dachsäulen sind dabei auf Stützflächen der Türsäulen und die Lagerkonsolen sind an Stützflächen des Strukturbauteiles der Tragstruktur abgestützt.

Aus der DE 35 40 814 C2 ist bereits eine solche Karosserie als bekannt zu entnehmen, auf deren im Wesentlichen aus großformatigen Teilmodulen zusammengesetzten Tragstruktur ein Dachmodul aufgesetzt ist. In zusammengebautem Zustand der Karosserie grenzt an das vordere untere Ende des Dachmoduls eine Motorhaube zum Verschließen des Motorraums am vorderen Endbereich der Karosserie an, wobei der Deckel über eine nahe des Dachmoduls angeordnete Lageranordnung an der Karosserie gehalten ist. Aufgrund von fertigungstechnischen Toleranzen beim Zusammenfügen des Dachmoduls mit den anderen Teilmodulen ist es dabei nur mit erhöhtem technischen Aufwand möglich, die an der Tragstruktur befestigte Motorhaube oder dgl. Deckel in einer exakten Lage gegenüber dem angrenzenden Dachmodul zu positionieren.

Der Erfindung liegt die Aufgabe zugrunde, eine Karosserie der eingangs genannten Art zu schaffen, bei der die Lagerkonsolen sowie die Lageranordnung verbessert an der Tragstruktur abgestützt sind.

Bei der erfindungsgemäß vorgeschlagenen Karosserie ist die Lageranordnung des Deckels bzw. der Motorhaube direkt an dem Dachmodul angeordnet, so dass der Deckel auf relativ einfache Weise und unter Vermittlung eines hochwertigen Qualitätseindrucks in einer exakten Lage gegenüber dem angrenzenden Dachmodul positioniert werden kann. Fertigungstechnische Toleranzen, die beim Zusammenfügen des Dachmoduls mit der Tragstruktur entstehen, haben somit keine Auswirkung auf die Position des Deckels gegenüber dem angrenzenden Dachmodul.

Eine technisch besonders günstige Lageranordnung umfasst jeweils ein an der zugeordneten Dachsäule des Dachmoduls befestigtes Lager, über welche eine positionsgenaue und stabile Lagerung des Deckels an dem Dachmodul gewährleistet werden kann.

Eine besonders stabile Abstützung der Lager ist mittels von Lagerkonsolen gegeben, welche in Verlängerung der Dachsäulen an deren unteren Enden angeordnet sind. Die Lagerkonsolen ruhen dabei bevorzugt auf Stützflächen der Tragstruktur, so dass sowohl eine gute Abstützung der Lagerkonsolen mit den Lagern wie auch des gesamten Dachmoduls über die Dachsäulen erreicht wird.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig.1: eine perspektivische Explosionsdarstellung auf die aus großformatigen Teilmodulen zusammengesetzte Tragstruktur der erfindungsgemäßen Kraftwagenkarosserie;
- Fig.2: eine weitere perspektivische Explosionsdarstellung auf die aus Teilmodulen zusammengesetzte Tragstruktur, welche mit Außenbeplankungsteilen verkleidet ist;
- Fig.3: eine Perspektivansicht auf ein Dachmodul, deren vordere Dachsäulen an ihrem unteren Ende Lagerkonsolen für die Lageranordnung der Motorhaube umfassen; und in
- Fig.4: eine vergrößerte Seitenansicht auf ein Lager der Lageranordnung für die Motorhaube.

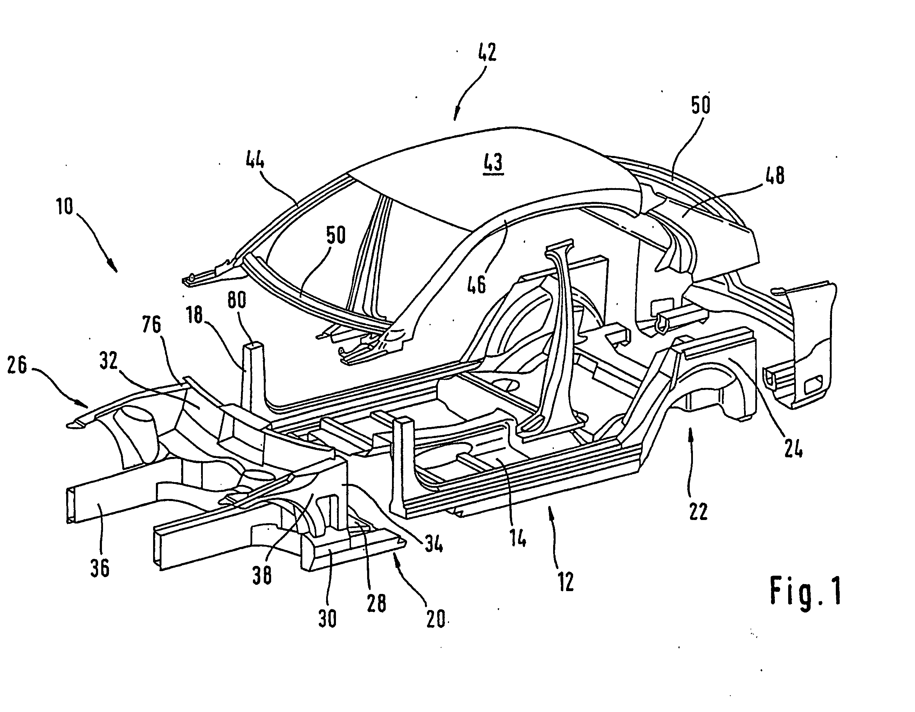

In Fig.1 ist in einer perspektivischen Explosionsdarstellung eine Tragstruktur.10 einer Kraftwagenkarosserie gezeigt, die aus mehreren großformatigen, im weiteren noch näher beschriebenen Teilmodulen zusammengesetzt ist. Die Teilmodule der Tragstruktur 10 sind in dem hier gezeigten Ausführungsbeispiel jeweils aus einer Mehrzahl von zusammengefügten Blechteilen hergestellt; gleichfalls können die Teilmodule jedoch auch in anderen Bauweisen, beispielsweise als sog. Spaceframe, als Kunststoffteile, Metallgussteile, als Bauteile in sog. Sandwich-Bauweise oder dgl. vorgefertigt sein. Insbesondere sind dabei auch Kombinationen unterschiedlicher Bauweisen für die zusammengefügten Teilmodule je nach Anwendung und Belastung denkbar. Die einzelnen Module sind insbesondere über Klebverbindungen, Schweißverbindungen oder dgl. zusammengefügt. Gleichfalls sind andere gängig Verbindungen wie Schraubverbindungen oder dgl. denkbar.

Ein Grundmodul 12 der Tragstruktur 10 umfasst im wesentlichen einen Karosserieboden 14, der seitlich von Längsträgern 16 begrenzt ist. Nach vorne reicht das Grundmodul 12 bis an Säulenabschnitte 18 von Vorderwandsäulen 20, welche von den jeweils zugeordneten vorderen Enden der seitlichen Längsträger 16 nach oben abragen. Der Karosserieboden 14 des Grundmoduls 12 endet in einem erheblichen Abstand hinter dem vorderen Ende des Grundmoduls 12 bzw. hinter den Säulenabschnitten 18 der Vorderwandsäulen 20. Hinten endet das Grundmodul 12 hinter hinteren Radhäusern 22, oberhalb denen Wandbereiche 24 der jeweiligen hinteren Seitenwand angeordnet sind. Das Grundmodul 12 wird bereits vor dem Zusammenfügen mit den anderen Teilmodulen so weit als möglich ausgestattet.

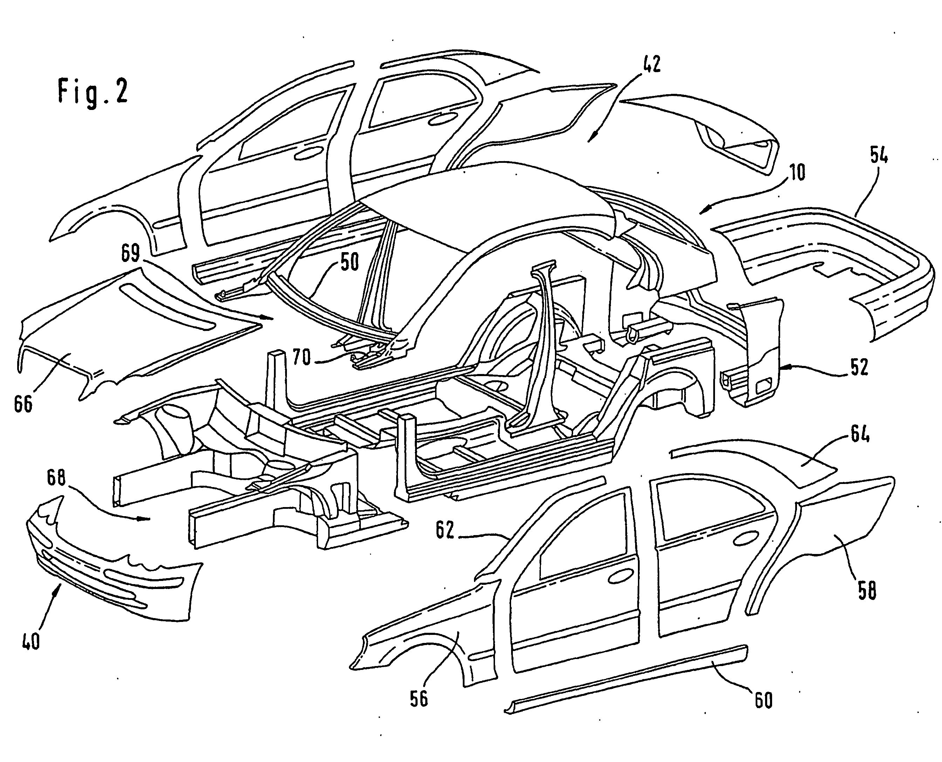

Mit dem Grundmodul 12 ist ein Vorbaumodul 26 verbunden, welches zur vorderen Knautschzone des Kraftwagens gehört und crashstabil am Grundmodul 12 abgestützt ist. Hierzu umfasst das Vorbaumodul 26 einen vorderen Endbereich 28 des Karosseriebodens 14, welcher sich zwischen seitlichen Längsträgerabschnitten 30 des Vorbaumoduls 26 erstreckt. Nach vorne endet der vordere Endbereich 28 des Karosseriebodens 14 an einer vorderen Stirnwand 32 der Fahrgastzelle, welche sich vom vorderen Endbereich 28 des Karosseriebodens 14 bis etwa auf Höhe der Bordwandkante der Tragstruktur 10 erstreckt. Seitlich wird die Stirnwand 32 von Säulenabschnitten 34 der Vorderwandsäulen 20 begrenzt, welche von den seitlichen Längsträgerabschnitten 30 des Vorbaumoduls 34 nach oben abragen. Am vorderen Ende des Vorbaumoduls 34 sind vordere Längsträger 36 sowie vordere Seitenwandbereiche 38 erkennbar. Nach vorne schließt sich an das Vorbaumodul 26 ein Frontmodul 40 an, welches in Fig.2 teilweise dargestellt ist und beispielsweise den vorderen Stoßfänger umfasst.

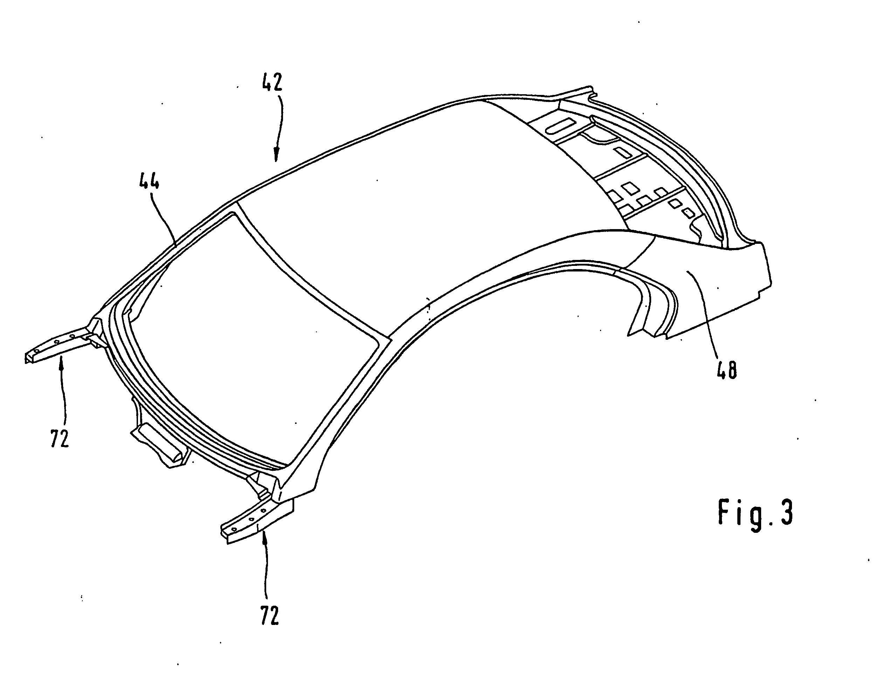

Auf das Grundmodul 12 und das Vorbaumodul 26 ist ein in Zusammenschau mit Fig.3 erkennbares Dachmodul 42 aufsetzbar, welches hier seitliche A-Säulen 44, im Bereich des Dachs 43 seitliche Dachsäulen 46, und C-Säulen 48 umfasst. Die unteren Enden der A-Säulen 44 bzw. der C-Säulen 48 sind über jeweils ein Querträgerelement 50 miteinander verbunden. Die A-Säulen 44 stützen sich bei zusammengesetzter Tragstruktur 10 auf im weiteren noch erläuterte Weise sowohl an dem Grundmodul 12 als auch am Vorbaumodul 26 ab. Hinten stützen sich die unteren Enden der C-Säulen 48 am jeweils zugeordneten oberen Ende der Wandbereiche 24 ab, wobei die Module 12,42 beispielsweise mittels einer Klebeverbindung miteinander verbunden sind.

Hinten schließt sich an das Grundmodul 12 ein Heckmodul 52 an, welches bei zusammengesetzter Tragstruktur 10 zusammen mit dem hinteren Endbereich des Grundmoduls 12 zur hinteren Knautschzone des Kraftwagens gehört und einen Kofferraum nach hinten begrenzt. Nach hinten schließt sich an das Heckmodul 52 ein Heckendmodul 54 mit einem hinteren Stoßfänger an, welches in Fig.2 teilweise erkennbar ist.

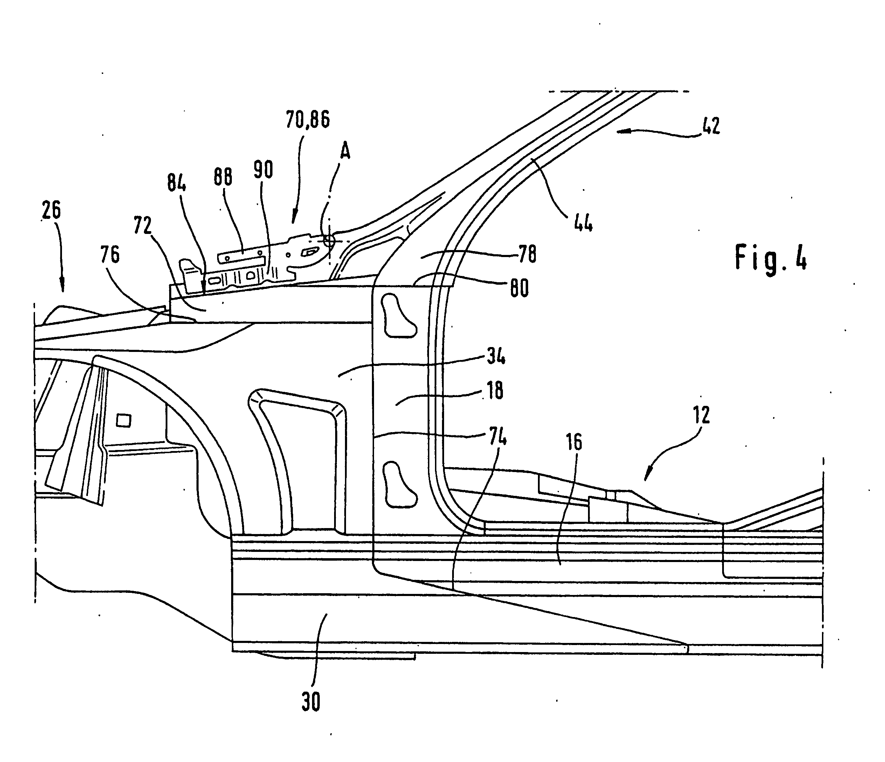

In Fig.2 ist in einer weiteren perspektivischen Explosionsdarstellung die aus den Teilmodulen 12,26,42 und 52 zusammengesetzte Tragstruktur 10 dargestellt, welche mit Außenbeplankungsteilen im Bereich der vorderen und hinteren Kotflügel 56,58 sowie des Schwellers 60 aus Kunststoff, Blech oder dgl. verkleidet ist. Die A-Säulen 44, die seitlichen Dachsäulen 46 und die C-Säulen 48 sind mit Säulenverkleidungsteilen 62,64 verkleidet. An das Dachmodul 42 grenzt ein Deckel in Form einer Motorhaube 66 an, mit der ein innerhalb des Vorbaumoduls 26 vorgesehener Motorraum 68 nach oben hin verschlossen ist. Der Deckel 66 ist dabei über eine unter Bezugnahme auf Fig.4 noch näher erläuterte Lageranordnung 69 mit zwei Lagern 70 nahe an dem Dachmodul 42 gehalten.

In Fig.3 ist in Perspektivansicht das Dachmodul 42 erkennbar, deren vordere Dachsäulen 44 an ihrem unteren Ende mit Lagerkonsolen 72 versehen sind, auf welchen sich die Lager 70 der Motorhaube 66 abstützen. Die Lagerkonsolen 72 können zum Beispiel aus einem Kastenprofil hergestellt sein.

In Fig.4 ist eine vergrößerte Seitenansicht ein Lager 70 der Lageranordnung 69 für die Motorhaube 66 am unteren Ende der A-Säule 44 des Dachmoduls 42 gezeigt. Von dem Grundmodul 12 ist der Längsträger 16 und der nach oben abragenden Säulenabschnitt 18 entlang einer Fügefläche 74 mit dem Längsträgerabschnitt 30 bzw. mit dem Säulenabschnitt 34 des Vorbaumoduls 26 bzw.. verbunden. Dabei haben die Längsträgerabschnitte 16,30 und die Säulenabschnitte 18,34 des Grundmoduls 12 und des Vorbaumoduls 26 jeweils ein im Querschnitt geschlossenes Kastenprofil, so dass nach dem Zusammenfügen der einander jeweils zugeordneten Kastenprofile seitliche Längsträger 16 bzw. Türsäulen 20 mit im Querschnitt doppeltem, etwa 8-förmigen, doppeltem Kastenprofil entstehen.

Die beiden A-Säulen 44 des Dachmoduls 42 sind über die Lagerkonsolen 72 auf Stützflächen 76 des Vorbaumoduls 26 und über hintere untere Endabschnitte 78 der Dachsäulen 44 auf Stützflächen 80 des Grundmoduls 12 abgestützt. Die Stützflächen 80 des Grundmoduls 12 werden dabei durch die oberen Enden der Säulenabschnitte 18 gebildet. Die jeweiligen Stützflächen 76,80 des Vorbaumoduls 26 und des Grundmoduls 12 sind dabei höhenversetzt zueinander angeordnet. Die Befestigung der Lagerkonsolen 72 auf den zugeordneten Stützflächen 76 bzw. der Endabschnitte 78 auf den zugeordneten Stützflächen 80 erfolgt dabei bevorzugt durch eine Klebeverbindung, wobei zusätzlich mechanische Verbindungen vorgesehen sein können.

Auf der hier ebenen Oberseite 84 der Lagerkonsolen 72 stützen sich die Lager 70 des Deckels ab, welche hier im wesentlichen jeweils ein Scharnier 86 umfassen, mit denen der Deckel 66 um die Schwenkachse A an der Tragstruktur 10 schwenkgelagert ist. Das Scharnier 86 umfasst einen mit dem Deckel 66 verbindbaren Scharnierteil 88 und einen auf der Lagerkonsole 72 befestigten Scharnierteil 90. Zur Befestigung des Scharnierteils 90 auf der auf der Lagerkonsole 72 eignet sich besonders eine Schraubverbindung, mit der das Scharnier 86 bzw. der Deckel 66 gegenüber dem Dachmodul 42 einstellbar ist.

Als im Rahmen der Erfindung mitumfasst ist es zu betrachten, dass neben der hier gezeigten Lagerung der Motorhaube die Lageranordnung natürlich auch zur Anordnung anderer Deckel, beispielsweise des Kofferraumdeckels an dem Dachmodul 42 geeignet ist.

## Patentansprüche

1. Karosserie für einen Kraftwagen mit einem auf eine Tragstruktur (10) aufgesetzten Dachmodul (42) mit folgenden Merkmalen:
• an das Dachmodul (42) grenzt ein Deckel (Motorhaube 66) zum Verschließen eines Raumes (Motorraum 68) an einem Endbereich der Karosserie an,
• der Deckel (66) ist über eine Lageranordnung (69) direkt an dem Dachmodul (42) angeordnet und bereits vor dem Aufsetzen des Dachmodule (42) auf die Tragstruktur (10) an dem Dachmodul (42) vormontierbar,
• das Dachmodul (42) ist an unteren Enden der Dachsäulen (44) mit jeweils einer Lagerkonsole (72) für die Lageranordnung (69) versehen,
• die Dachsäulen (44) sind auf Stützflächen (80) der Türsäulen (20) und die Lagerkonsolen (72) auf Stützflächen (76) der Tragstruktur (10) abgestützt,
**gekennzeichnet durch** die Merkmale,
• dass die Türsäulen (20) aus zwei Säulenabschnitten (18,34) zusammengefügt sind, und
• dass die Dacheäulen (44) auf den jeweils zugeordneten Stützflächen (80) des einen Säulenabschnittes (18) und die Lagerkonsolen (72) auf den jeweils zugeordneten Stützflächen (76) des weiteren Säulenabschnittes (34) abgestützt sind.

2. Karosserie nach Anspruch 1,
**dadurch gekennzeichnet,**
**dass** die weiteren Säulenabschnitte (34) einem Vorbaumodul (26) der Tragstruktur (10) zugeordnet sind.

3. Karosserie nach Anspruch 2,
**dadurch gekennzeichnet,**
**dass** die weiteren Säulenabschnitte (34) von den seitlichen Längsträgerabschnitten (30) des Vorbaumoduls (26) nach oben abragen.

4. Karosserie nach Anspruch 1,
**dadurch gekennzeichnet,**
**dass** die Stützflächen (76,80) der Säulenabschnitte (18,34) höhenversetzt zueinander angeordnet sind.

5. Karosserie nach Anspruch 1,
**dadurch gekennzeichnet,**
**dass** sich auf den Lagerkonsolen (72) jeweils ein zugeordnetes Lager (70) des Deckels (66) abstützt.

6. Karosserie nach Anspruch 5,
**dadurch gekennzeichnet,**
**dass** die Lager (70) jeweils ein Scharnier (86) umfassen, mit denen der Deckel (66) an der Tragstruktur (10) schwenkgelagert ist.

## Claims

1. Motor vehicle body, having a roof module (42) which is placed onto a supporting structure (10), with the following features:
• a lid (bonnet 66) for closing a compartment (engine compartment 68) at one end region of the body adjoins the roof module (42),
• the lid (66) is arranged directly on the roof module (42) via a bearing arrangement (69) and can already be preassembled on the roof module (42) before the roof module (42) is placed onto the supporting structure (10),
• the roof module (42) is provided at the lower ends of the roof pillars (44) with a respective bearing console (72) for the bearing arrangement (69),
• the roof pillars (44) are supported on supporting surfaces (80) of the door pillars (20) and the bearing consoles (72) are supported on supporting surfaces (76) of the supporting structure (10),
**characterized by** the following features,
• that the door pillars (20) are joined together from two pillar sections (18, 34), and
• that the roof pillars (44) are supported on the respectively assigned supporting surfaces (80) of the one pillar section (18) and the bearing consoles (72) are supported on the respectively assigned supporting surfaces (76) of the further pillar section (34).

2. Body according to Claim 1, **characterized in that** the further pillar sections (34) are assigned to a front-end module (26) of the supporting structure (10).

3. Body according to Claim 2, **characterized in that** the further pillar sections (34) protrude upwards from the lateral longitudinal member sections (30) of the front-end module (26).

4. Body according to Claim 1, **characterized in that** the supporting surfaces (76, 80) of the pillar sections (18, 34) are arranged offset in height with respect to each other.

5. Body according to Claim 1, **characterized in that** an associated bearing (70) of the lid (66) is supported in each case on the bearing consoles (72).

6. Body according to Claim 5, **characterized in that** the bearings (70) in each case comprise a hinge (86) with which the lid (66) is mounted pivotally on the supporting structure (10).

## Revendications

1. Carrosserie pour un véhicule automobile comprenant un module de toit (42) posé sur une structure portante (10), ayant les caractéristiques suivantes :
- le module de toit (42) est adjacent à un couvercle (capot de moteur 66) pour fermer un compartiment (compartiment moteur 68) au niveau d'une région d'extrémité de la carrosserie,
- le couvercle (66) est disposé directement sur le module de toit (42) par le biais d'un agencement de support (69) et déjà avant la pose du module de toit (42) sur la structure portante (10), peut être prémonté sur le module de toit (42),
- le module de toit (42) est pourvu aux extrémités inférieures des colonnes de toit (44) d'une console de support respective (72) pour l'agencement de support (69),
- les colonnes de toit (44) sont supportées sur des surfaces de support (80) des colonnes de portière (20) et les consoles de support (72) sont supportées sur des surfaces de support (76) de la structure portante (10),
**caractérisée par** les caractéristiques suivantes :
- les colonnes de portière (20) sont assemblées à partir de deux portions de colonne (18, 34) et
- les colonnes de toit (44) sont supportées sur les surfaces de support associées respectives (80) d'une portion de colonne (18) et les consoles de support (72) sont supportées sur les surfaces de support associées respectives (76) de l'autre portion de colonne (34).

2. Carrosserie selon la revendication 1,
**caractérisée en ce que**
les autres portions de colonne (34) sont associées à un module préfabriqué (26) de la structure portante (10).

3. Carrosserie selon la revendication 2,
**caractérisée en ce que**
les autres portions de colonne (34) dépassent vers le haut depuis les portions de support longitudinales latérales (30) du module préfabriqué (26).

4. Carrosserie selon la revendication 1,
**caractérisée en ce que**
les surfaces de support (76, 80) des portions de colonne (18, 34) sont disposées de manière décalée en hauteur les unes par rapport aux autres.

5. Carrosserie selon la revendication 1,
**caractérisée en ce**
**qu'**un support associé (70) du couvercle (66) s'appuie sur les consoles de support (72).

6. Carrosserie selon la revendication 5,
**caractérisée en ce que**
les supports (70) comprennent chacun une charnière (86) avec laquelle le couvercle (66) est monté à pivotement sur la structure portante (10).
